# EUROPÄISCHE PATENTANMELDUNG

(11) **EP 2 228 887 A1**
(43) Veröffentlichungstag der Anmeldung: **15.09.2010**
(21) Anmeldenummer: 09003400.0
(22) Anmeldetag: 09.03.2009
(51) Int. Cl.: H02K 1/32, H02K 3/24, H02K 9/08

(54) **Rotor für einen Turbogenerator sowie Turbogenerator mit einem Rotor**

(71) Anmelder: Siemens Aktiengesellschaft, 80333 München (DE)
(72) Erfinder: Kowalski, Waldemar, 45472 Mülheim an der Ruhr (DE); Lehman, Christoph, Dr., 47506 Neukirchen-Vluyn (DE)

(57) **Zusammenfassung**

Der Rotor (2) für einen Turbogenerator (1) umfasst
- eine zylinderförmigen sich mittig zu einem Rotorballen (7) verdickenden Rotorwelle (5),
- in den Zylindermantel (20) des Rotorballens (7) eingebrachte, in Umfangsrichtung (12) zueinander beabstandete und in Wellenlängsrichtung (6) verlaufenden Nuten (21),
- eine von den Nuten (21) aufgenommene Erregerwicklung (23),
- einen von einem Kühlgas (K) durchströmten, zwischen dem Nutgrund (28) einer Nut (21) und dem dem Zylindermantel (20) abgewandten Ende der Erregerwicklung (23) freigelassenen Zuführkanal (29) und
- im Wesentlichen in radialer Richtung (R) die Erregerwicklung (23) durchsetzende, den Zuführkanal (29) mit jeweils einer Ausströmöffnung (31) im Zylindermantel (20) des Rotorballens (7) verbindende Kühlkanäle (30).

Im Bereich der Mittellängsachse (13) ist mindestens ein Verteilerkanal (32) angeordnet, der in Wellenlängsrichtung (6) verläuft. Die jeweiligen Zuführkanäle (29) sind mit dem Verteilerkanal (32) durch Verbindungskanäle (33) verbunden. Je Verteilerkanal (33) ist mindestens ein Einlasskanal (36) zur Zufuhr des Kühlgases (K) vorgesehen.

## Beschreibung

### Beschreibung

Rotor für einen Turbogenerator sowie Turbogenerator mit einem Rotor

Die Erfindung bezieht sich auf einen Rotor für einen Turbogenerator sowie auf einen Turbogenerator mit einem derartigen Rotor.

Ein Turbogenerator ist beispielsweise aus der EP 1 742 330 A1 bekannt. Er weist einen antreibbaren, drehbeweglich gelagerten Rotor, auch Läufer genannt, und einen den Rotor umgebenden ortsfesten Stator, auch Ständerteil genannt, auf. Der Rotor umfasst eine zylinderförmige Rotorwelle, die sich in Wellenlängsrichtung mittig zu einem Rotorballen verdickt. Der Rotorballen wird auch als Läuferballen bezeichnet. Auf dem Rotorballen ist eine mit einem Strom beaufschlagbare Erregerwicklung angeordnet. Der Stator weist eine Statorwicklung auf. Zur Erzeugung von elektrischer Energie ist die Rotorwelle mit einem Antrieb, insbesondere mit einer Antriebswelle einer Turbine, gekoppelt. Auf diese Weise lässt sich der Rotor in eine Drehbewegung gegenüber dem ortsfesten Stator versetzen. Wird dabei der Rotor von einem Strom durchflossen, so wird ein magnetisches Drehfeld erzeugt, das in der Statorwicklung einen elektrischen Strom induziert. Heutzutage weist ein Turbogenerator eine elektrische Leistung zwischen 100 MW und 1.500 MW auf.

Aus der US 3,119,033 ist bekannt, den Zylindermantel des Rotorballens mit in Wellenlängsrichtung verlaufenden und in Umfangsrichtung zueinander beabstandeten Nuten zu versehen und die Erregerwicklung in diesen Nuten anzuordnen. In den Nuten sind dazu eine Mehrzahl von in Wellenlängsrichtung verlaufenden und gegeneinander isolierten Leiterstäben übereinander gestapelt. Zur Zylindermantelfläche des Rotorballens hin ist ein in eine Profilierung eingeschobener Nutverschlusskeil zum Absichern der Leiterstäbe gegen die bei der Umdrehung des Rotors herrschenden Fliehkräfte vorgesehen.

Aus der Auslegeschrift 1 036 997 ist bekannt, in nebeneinander liegenden Nuten gelagerte Leiterstäbe endseitig über in Umfangsrichtung der Welle verlaufende Tangentialleiter leitend miteinander zu verbinden zur Bildung der Erregerwicklung. Die Verbindung der Leiterstäbe mit den Tangentialleitern erfolgt insbesondere durch Verlöten. Die Tangentialleiter sind auf einem zwischen dem Wellenende und dem Ansatz des Rotorballens ausgebildeten Wellenschenkel gelagert. Sie bilden einen sogenannten Wickelkopf. Sie sind mit einer Rotorkappe gegen die bei der Drehbewegung des Rotors herrschenden Fliehkräfte abgesichert.

Beim Stromfluss durch die Erregerwicklung entsteht eine große Wärmemenge, die zur Gewährleistung eines störungsfreien Betriebs und zur Ausnutzung des vollen Leistungspotentials des Turbogenerators abgeführt werden muss. Dazu wird die Erregerwicklung gekühlt. So ist es aus der bereits zitierten US 3,119,033 bekannt, zwischen dem Nutgrund einer jeden Nut und dem dem Zylindermantel abgewandten Ende der Erregerwicklung einen Zuführkanal freizulassen. Im Wesentlichen in radialer Richtung des Rotorballens sind die Erregerwicklung durchsetzende, den Zuführkanal mit jeweils einer Ausströmöffnung im Zylindermantel des Läuferballens verbindende Kühlkanäle vorgesehen. Dazu werden die Leiterstäbe der Erregerwicklung mit Ausnehmungen, mit Bohrungen oder mit Schlitzen versehen, die beim Anordnen der Leiterstäbe in der Nut zumindest teilweise übereinander zu liegen kommen zur Bildung der durchgängigen Kühlkanäle. Die Kühlung der Erregerwicklung erfolgt nunmehr, indem dem Zuführkanal ein Kühlgas, üblicherweise Luft oder Wasserstoff, zugeführt wird. Das Kühlgas durchströmt nun - vom Zuführkanal aus gesehen - die Kühlkanäle zu ihren Ausströmöffnungen hin und transportiert dabei die von der Erregerwicklung produzierte Verlustwärme ab. Das von der Verlustwärme erwärmte Kühlgas strömt über die Ausströmöffnungen in den Zwischenraum zwischen dem Rotor und dem Stator, der einen Gassammelraum für das Kühlgas bildet.

Aus der DE 197 32 949 A1 ist es bekannt, den Stator und den Rotor mit einem gemeinsamen gasdichten Gehäuse zu umgeben. An den beiden Wellenenden ist jeweils ein Lüfterrad gelagert. Dieses Lüfterrad wird nach Art eines Axiallüfters beim Drehen des Rotors mitbewegt. Auf diese Weise wird das Kühlgas gleichsam von Eintrittsstellen im Bereich der Zuführkanäle über die Kühlkanäle und den als Gassammelraum wirkenden Zwischenraum zwischen Rotor und Stator gesaugt. Die Kühlung des Rotors ist somit als Saugkühlung ausgebildet.

Je größer ein Rotor ausgebildet ist, desto länger werden die vom Kühlgas in den Zuführkanälen und in der Erregerwicklung vom Kühlgas zurückzulegenden Strömungswege. Entsprechend ist bei einem großen Rotor eine größere Leistung des Sauggebläses notwendig, um durch die Zuführkanäle und anschließend durch die Kühlkanäle eine entsprechende Kühlgasmenge zu fördern. Die Leistung der auf der Rotorwelle sitzenden Lüfterräder lässt sich jedoch nicht beliebig steigern, da sie an die Drehzahl der Rotorwelle gekoppelt ist.

Der Erfindung liegt daher die Aufgabe zugrunde, die Kühlung eines Rotors für einen Turbogenerator durch geeignete Maßnahmen zu verbessern. Weiterhin liegt der Erfindung die Aufgabe zugrunde, einen Turbogenerator mit einem derartigen Rotor anzugeben.

Bezüglich des Rotors wird die Aufgabe erfindungsgemäß gelöst durch die Merkmalskombination des Anspruchs 1. Dabei wird erkannt, dass auf das Kühlgas aufgrund der Drehbewegung des Rotors beim Strömen durch die Kühlkanäle in radialer Richtung eine Zentrifugalkraft wirkt, deren Kraftkomponente in Strömungsrichtung weist. Auf diese Weise wird die Saugwirkung des Sauggebläses durch die Drehbewegung des Rotors unterstützt. Es wird nunmehr vorgeschlagen, mindestens einen Verteilerkanal im Bereich der Mittellängsachse der Welle anzuordnen, der im Wesentlichen in Wellenlängsrichtung verläuft. Der Verteilerkanal liegt somit näher der Mittellängsachse des Rotors, als die Zuführkanäle. Der Verteilerkanal ist durch Verbindungskanäle mit den Zuführkanälen verbunden.

Zur Kühlung der Erregerwicklung strömt das Kühlgas nun zunächst in den Verteilerkanal. Vom Verteilerkanal strömt das Kühlgas über jeweils zumindest einen Verbindungskanal weiter zu den dem Verteilerkanal zugeordneten Zuführkanälen. Von dort aus strömt es über die Kühlkanäle in radialer Richtung durch die Erregerwicklung und über die Ausströmöffnungen in den Spalt zwischen dem Rotor und dem Stator. Da der Verteilerkanal näher der Mittellängsachse verläuft als die Zuführkanäle, verlaufen die Verbindungskanäle zumindest teilweise in radialer Richtung. Beim Durchströmen der Verbindungskanäle vom Verteilerkanal zu den Zuführkanälen hin wirkt auf das Kühlgas somit eine Zentrifugalkraft. Diese Zentrifugalkraft tritt zu der Zentrifugalkraft hinzu, die auf das Kühlgas beim Durchströmen der Kühlkanäle wirkt. Die auf das Kühlgas wirkende Zentrifugalkraft ist somit vergrößert. Mit anderen Worten lässt sich somit die das Sauggebläse bei der Förderung des Kühlgases unterstützende Wirkung der Zentrifugalkraft vergrößern. Es lässt sich somit bei ansonsten gleicher Geometrie der Kühlkanäle eine höhere Menge an Kühlgas durch die Kühlkanäle fördern. Auf diese Weise lässt sich unter einer Beibehaltung der Geometrie der Kühlkanäle eine höhere Wärmemenge von der Erregerwicklung abführen.

In einer vorteilhaften Variante wird die Geometrie der Kühlkanäle derart verändert, dass ihr Strömungswiderstand erhöht ist. Dazu können beispielsweise die Ausnehmungen, Bohrungen oder Schlitze in den Leiterstäben so angeordnet werden, dass sie im Montageendzustand der Erregerwicklung leicht gegeneinander versetzt sind. Beim Durchströmen der Kühlkanäle ist somit der Wärmeübergang durch Konvektion von den Wandungen der Kühlkanäle auf das Kühlgas verbessert. Aufgrund der Unterstützung der Förderung des Kühlgases durch die zusätzliche Zentrifugalkraft lässt sich trotz des größeren Strömungswiderstandes eine hinreichende Menge an Kühlgas durch die Kühlkanäle fördern.

Es ist somit in beiden Fällen eine verbesserte Kühlwirkung erreicht. Auf diese Weise lässt sich insbesondere bei einem großen Rotor eines Turbogenerators mit hoher elektrischer Leistung eine hinreichende Kühlwirkung erzielen. Somit besteht auch bei einem derartigen Turbogenerator nicht mehr die Gefahr einer Überhitzung der Erregerwicklung.

Die Zufuhr des Kühlgases erfolgt zweckmäßig über zumindest einen Einlasskanal, der den Verteilerkanal mit der Wellenaußenseite verbindet.

Zweckmäßig verlaufen die Verbindungskanäle in rein radialer Richtung. Auf diese Weise ist die Reibung des Kühlgases mit den Wandungen der Verbindungskanäle minimal. Auf das Kühlgas wirkt somit die beim Durchströmen der Verbindungskanäle maximal mögliche Zentrifugalkraft. Somit lässt sich eine besonders hohe Fördermenge von Kühlgas durch die Kühlkanäle erreichen.

In einer zweckmäßigen Weiterbildung liegen die Verbindungskanäle und die Kühlkanäle in Flucht zueinander. Dabei kann beispielsweise einem jeden Kühlkanal ein Verbindungskanal zugeordnet sein. Entsprechend kommt es in den Zuführkanälen kaum zu einer Verwirbelung bzw. zu einem Querstrom in axialer Richtung des Kühlgases. Somit wirkt auf das Kühlgas gleichsam die maximal mögliche Zentrifugalkraft beim nachfolgenden Durchströmen der Verbindungskanäle und der Kühlkanäle.

Ein Verteilerkanal kann dabei einer Mehrzahl von Zuführkanälen gemeinsam zugeordnet sein. Zweckmäßig ist jedoch ein zentraler Verteilerkanal für die Beaufschlagung sämtlicher Zuführkanäle mit Kühlgas vorgesehen. Durch die Ausbildung eines zentralen Verteilerkanals lässt sich die Länge der Verbindungskanäle in radialer Richtung maximal gestalten. Auf diese Weise wirkt auf das Kühlgas die bezogen auf den Durchmesser des Rotorballens maximal erreichbare Zentrifugalkraft, so dass sich eine besonders gute Kühlwirkung erzielen lässt.

In einer zweckmäßigen Weiterbildung verläuft der zumindest eine Einlasskanal im Wesentlichen in radialer Richtung. Auf diese Weise lässt sich der Strömungsweg des Kühlgases so kurz wie möglich halten. Dies geht mit einem geringen Strömungswiderstand einher.

In einer zweckmäßigen Weiterbildung sind die stirnseitigen Enden der Zuführkanäle verschlossen. Auf diese Weise kann es zu keinen unerwünschten Leckströmen von Kühlgas in den Bereich der beiden stirnseitig am Rotorballen angeordneten Wickelköpfe kommen. Somit lässt sich das Kühlgas ohne Verlust den Kühlkanälen zuführen.

In einer zweckmäßigen Weiterbildung ist im Zuführkanal ein an dessen Abmessungen angepasster zusätzlicher Leiterstab zur Vergrößerung der Erregerwicklung angeordnet. Durch ein endseitiges Verbinden benachbarter zusätzlicher Leiterstäbe im Bereich der beiden Wickelköpfe durch zusätzliche Tangentialleiter sind somit zusätzliche Wicklungen der Erregerwicklung gebildet. Es lässt sich somit bezüglich der Erregerwicklung mit geringem Aufwand ein erhöhter magnetischer Fluss erreichen. Somit lässt sich ohne großen baulichen Aufwand eine erhöhte elektrische Leistung des Turbogenerators erzielen.

Der jeweils im Zuführkanal angeordnete zusätzliche Leiterstab weist dabei entsprechend Ausnehmungen, Schlitze oder Bohrungen auf, die im Wesentlichen mit den Ausnehmungen, Schlitzen oder Bohrungen des über ihm liegenden Leiterstabes fluchten, so dass sich die Kühlkanäle im Wesentlichen vom Nutgrund aus bis zur Zylindermantelfläche des Rotorballens erstrecken.

Bezüglich des Turbogenerators wird die obige Aufgabe erfindungsgemäß gelöst durch die Merkmale des Anspruchs 9. Danach umfasst der Turbogenerator einen Rotor nach einem der Ansprüche 1 bis 8.

Nachfolgend wird ein Ausführungsbeispiel der Erfindung anhand einer Zeichnung näher erläutert. Darin zeigen die einzelnen Figuren:
- FIG 1: einen Turbogenerator mit einem Rotor und einem Stator;
- FIG 2: einen Schnitt mit einer Schnittebene quer zur Wellenlängsrichtung durch eine Nut und eine in der Nut angeordnete Erregerwicklung; und
- FIG 3: die linke Seite des Rotors aus FIG 1 in einer in Wellenlängsrichtung geschnittenen Seitenansicht.

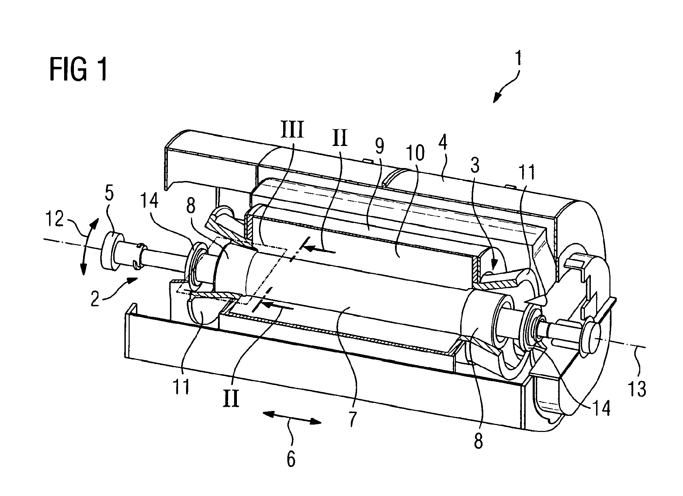

FIG 1 zeigt einen Turbogenerator 1 mit einem Rotor 2 und einem den Rotor aufnehmenden Stator 3. Der Rotor 2 wird auch als Läufer, der Stator 3 auch als Ständer bzw. Ständerteil bezeichnet. Der Rotor 2 und der Stator 3 sind von einem gemeinsamen gasdichten Gehäuse 4 aufgenommen. Der Rotor 2 umfasst eine Rotorwelle 5, die sich in Wellenlängsrichtung 6 mittig zu einem Rotorballen 7 verdickt. Der Rotorballen 7 wird auch als Läuferballen oder als Aktivteil bezeichnet. Auf der Zylindermantelfläche des Rotorballens 7 ist eine in der Figur nicht dargestellte Erregerwicklung angeordnet. Die von der Wellenlängsrichtung 6 her gesehen beide Enden des Rotorballens 7 weisen jeweils eine Rotorkappe 8 auf. Der den von der Wellenlängsrichtung 6 her gesehen den Rotorballen 7 umschließende Abschnitt des Stators 3 wird als Statoraktivteil 9 bzw. als Ständeraktivteil bezeichnet. Das Statoraktivteil 9 weist einen ferromagnetischen Hohlkörper 10 auf, in dem nicht zu sehende Statorleiter bzw. Ständerleiter angeordnet sind. Von der Wellenlängsrichtung 6 her gesehen schließt sich an die beiden Enden des Statoraktivteils 9 jeweils ein Statorwickelkopf 11 an, der auch als Ständerwickelkopf bezeichnet wird.

Die Erregerwicklung des Rotors 2 ist mit einem Strom beaufschlagbar. Die Rotorwelle 5 ist mit einer Antriebswelle einer nicht dargestellten Turbine koppelbar und von der Turbine in eine Drehbewegung versetzbar. Wird nun der Rotor 3 in eine Drehbewegung in Umfangsrichtung 12 um seine Mittellängsachse 13 herum versetzt, so erzeugt er ein magnetisches Drehfeld. Dieses magnetische Drehfeld durchsetzt die nicht dargestellten Ständerleiter des Stators 3 mit einem variablen magnetischen Fluss. Somit wird in den Ständerleitern nach dem Induktionsgesetz ein Strom induziert, der sich am Stator 3 abgreifen lässt. Auf weitere Einzelheiten bezüglich der Stromerzeugung durch den Turbogenerator 1 wird nicht eingegangen werden.

Im Betrieb des Turbogenerators 1 erhitzen sich die Erregerwicklung 23 des Rotors 2 und die Ständerleiter des Stators 9. Durch diese Erhitzung wird der Betrieb des Turbogenerators 1 beeinträchtigt. Zur Kühlung der Erregerwicklung 23 und der Ständerleiter ist daher eine Gaskühlung vorgesehen. Von der Gaskühlung sind in der FIG 1 jedoch nur die beiden sich in Wellenlängsrichtung 6 an die Rotorkappen 8 anschließenden, auf der Welle angeordneten Lüfterräder 14 zu sehen. Jedes der Lüfterräder 14 bildet zusammen mit der Rotorwelle 5 ein Axialgebläse. Als Kühlgas wird insbesondere Luft oder Wasserstoff eingesetzt.

In den Zylindermantel 20 des Rotorballens 7 sind in Wellenlängsrichtung 6 durchgängige, in Umfangsrichtung 12 zueinander beabstandete Nuten 21 eingebracht. Die Vorsprünge zwischen den einzelnen Nuten werden als Rotorzähne 22 bezeichnet. In jeder Nut 21 ist ein Teil der Erregerwicklung 23 aufgenommen. Die Erregerwicklung 23 ist gebildet durch in radialer Richtung R des Rotorballens 7 übereinander angeordnete, in Wellenlängsrichtung 6 verlaufende Leiterstäbe 24. Die Leiterstäbe 24 sind gegeneinander und gegen den Rotorballen 7 über eine Isolierung 25 isoliert.

Zum Zylindermantel 20 des Rotorballens 7 hin sind an den Innenwandungen der Nut 21 bzw. an einander benachbarten die Nut 21 einfassenden Rotorzähnen 22 einander gegenüberliegende Profilierungen 26 vorgesehen. In diese Profilierungen 26 ist ein Nutverschlusskeil 27 eingeschoben. Der Nutverschlusskeil 27 sichert im Betrieb des Rotors 2 die Erregerwicklung 23 gegen Fliehkräfte ab.

Zwischen dem Nutgrund 28 und dem dem Zylindermantel 20 abgewandten Ende der Erregerwicklung 23 ist ein Zuführkanal 29 freigelassen. In diesem Zuführkanal 29 ist ein weiterer Leiterstab 24' angeordnet, der gegenüber dem in radialer Richtung R zum Zylindermantel 20 hin über ihm liegenden Leiterstab 24 und gegenüber dem Rotorballen 7 mittels einer Isolierung 25 versehen ist. Auf diese Weise ist eine Vergrößerung der Wicklung des Rotorballens 7 erreicht.

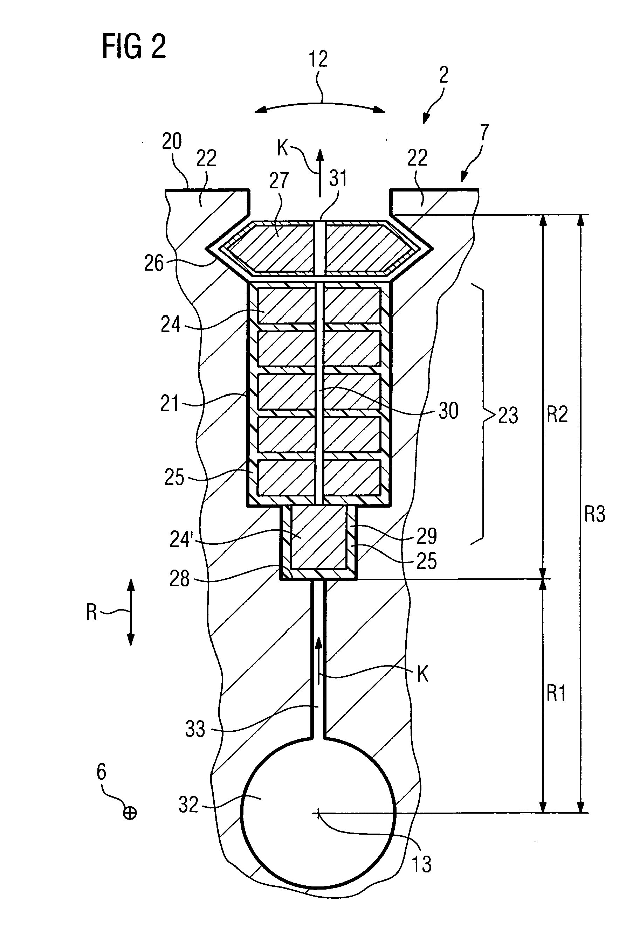

In den Leiterstäben 24, 24' und im Nutverschlusskeil 27 sind Ausnehmungen vorgesehen, die im Montageendzustand der Erregerwicklung 23 einen durchgängigen Kühlkanal 30 ergeben. Je Nut 21 ist eine Vielzahl derartiger in Wellenlängsrichtung 6 zueinander beabstandeter Kühlkanäle 30 vorgesehen, die zum Zylindermantel hin jeweils in einer Ausströmöffnung 31 enden. In der Rotorwelle 5 ist ein in Wellenlängsrichtung 6 verlaufender mittiger Verteilerkanal 32 angeordnet. Mit anderen Worten fällt der Verteilerkanal 32 mit dem Verlauf der Mittellängsachse 13 der Rotorwelle 5 zusammen. Der Verteilerkanal 32 weist in Wellenlängsrichtung 6 einander beabstandete Verbindungskanäle 33 auf, die zu den Zuführkanälen 29 der einzelnen Nuten 22 führen. In der FIG 2 ist der Übersicht halber lediglich der Verbindungskanal 33 zu einem einzigen Zuführkanal 29 gezeichnet.

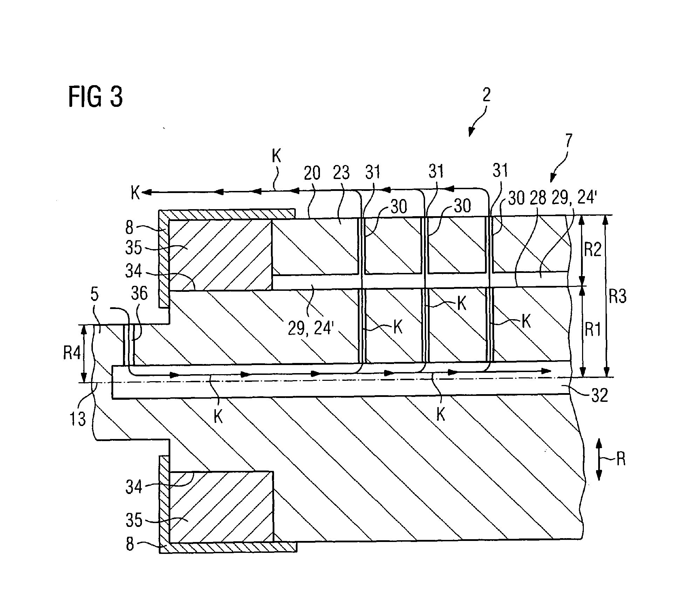

FIG 3 zeigt das linke Ende der Welle 5 aus FIG 1 in einer geschnittenen Seitenansicht in Wellenlängsrichtung 6. Vom Rotorballen 7 nach in Wellenlängsrichtung 6 nach links ist lediglich der Abschnitt der Rotorwelle bis zum Lüfterrad 14, aber ohne dieses, gezeichnet. Die Schnittebene durch den Rotorballen 7 verläuft dabei derart, dass eine Nut 21 mit der in ihr angeordneten Erregerwicklung 23 geschnitten ist. Die Erregerwicklung 23 ist in der FIG 3 jedoch nur schematisch dargestellt. Eingezeichnet sind jedoch die in der Erregerwicklung 23 in radialer Richtung R verlaufenden Kühlkanäle 30.

Zwischen dem Ende des Rotorballens 7 und der Rotorwelle 5 ist ein Wellenschenkel 34 ausgebildet. Dieser Wellenschenkel 34 weist einen Durchmesser auf, der zwischen dem Durchmesser der Welle 5 und dem Durchmesser des Rotorballens 7 liegt. Endseitig sind Leiterstäbe benachbarter Nuten 21 über nicht dargestellte tangentiale leitende Verbindungsstücke miteinander verlötet. Auf diese Weise ist im schraffiert gezeichneten Bereich ein so genannter Wickelkopf 35 gebildet. Die Tangentialleiter umlaufen dabei den Wellenschenkel 34 in Umfangsrichtung 12 abschnittsweise. Sie werden durch die Rotorkappe 8 in ihrer Position gegen Fliehkräfte abgesichert.

Der Verteilerkanal 32 verläuft in Wellenlängsrichtung 6 unter dem gesamten Rotorballen 7. Über eine Anzahl radial verlaufender Einlasskanäle 36 ist der Verteilerkanal 32 mit der Wellenoberfläche der Rotorwelle 5 verbunden. Die Einlasskanäle 36 sind beispielsweise sternförmig in radialer Richtung R in der Rotorwelle 5 angeordnet. In der Schnittebene der FIG 3 ist nur ein Einlasskanal 36 zu sehen. Beim Einbringen der Einlasskanäle 36 in die Rotorwelle 5 ist darauf zu achten, dass die Rotorwelle 5 durch die als Bohrungen ausgeführten Einlasskanäle 36 mechanisch nicht geschwächt wird.

Im Betrieb des Turbogenerators 1 erwärmt sich die Erregerwicklung 23 des Rotors 2. Zur Kühlung wird daher mittels der Lüfterräder 14 ein Kühlgasstrom K durch die Kühlkanäle 30 geleitet. Das Kühlgas K tritt in die Einlasskanäle 36 ein. Von dort strömt es über den Verteilerkanal 32 und die Verbindungskanäle 33 zu den Zuführkanälen 29. Der Zuführkanal 29 verteilt das Kühlgas auf die einzelnen Kühlkanäle 30, die die Erregerwicklung 23 in radialer Richtung R durchsetzen. Beim Durchströmen der Erregerwicklung 23 findet an den Wandungen der Kühlkanäle 30 ein Wärmeübergang durch Konvektion statt. Auf diese Weise wird Wärme von der Erregerwicklung 23 bzw. von ihren Leiterstäben 24 und vom Nutverschlusskeil 27 abgeführt. Das durch die abgegebene Wärme der Erregerwicklung 23 erwärmte Kühlgas K tritt über die Ausströmöffnungen 31 in den Spalt zwischen Rotor 2 und Stator 3 ein und strömt zu einer Kühlvorrichtung, wo es einer Kühlung unterzogen wird. Im Anschluss beginnt der Weg des Kühlgases durch den Rotor 2 von neuem.

Beim Strömen von der Außenseite der Welle 5 her über die Einlasskanäle 36 zum Verteilerkanal 32 wird in radialer Richtung R vom Kühlgas K die Strecke R4 überbrückt. Beim Strömen vom Verteilerkanal 32 zum Zuführkanal 29 über die Verbindungskanäle 33 wird in radialer Richtung R vom Kühlgas K die Strecke R1 überbrückt. Beim Durchströmen der Kühlkanäle 30 vom Zuführkanal 29 zu den Ausströmöffnungen 31 im Zylindermantel 20 hin wird in radialer Richtung R die Strecke R2 überbrückt. Insgesamt wird somit der Rotorballen 7 in radialer Richtung R vom Verteilerkanal 32 aus entlang der Strecke R3 durchströmt, die sich aus den Summen der Strecken R1 und R2 ergibt und die dem Radius des Rotorballens 7 entspricht.

Die auf das Kühlgas K wirkende Zentrifugalkraft ist zur in radialer Richtung R zurückgelegten Wegstrecke proportional. Bei einem nach dem Stand der Technik ausgeführten Rotor wird lediglich die Strecke R2 der Kühlkanäle 30 zwischen dem Zuführkanal 29 und den Ausströmöffnungen 31 durchströmt. Auf das Kühlgas K wirkt entsprechend eine Zentrifugalkraft, die proportional zur Strecke R2 ist. Demgegenüber wird gemäß FIG 3 nunmehr zusätzlich eine Zentrifugalkraft auf den Kühlgas K, die proportional zur Differenz der Strecken R1 und R4 ist. Durch diese zusätzlich wirkende Zentrifugalkraft wird der Durchströmungsvorgang des Kühlgases K in radialer Richtung R von innen nach außen zum Zylindermantel 20 des Rotors 2 hin unterstützt. Somit lässt sich pro Zeiteinheit ein erhöhter Volumenstrom an Kühlgas K durch die Kühlkanäle 30 durchsetzen. Somit ist eine gute Kühlung der Erregerwicklung 23 erreicht.

## Patentansprüche

1. Rotor (2) für einen Turbogenerator (1)
- mit einer zylinderförmigen sich mittig zu einem Rotorballen (7) verdickenden Rotorwelle (5),
- mit in den Zylindermantel (20) des Rotorballens (7) eingebrachten, in Umfangsrichtung (12) zueinander beabstandeten und in Wellenlängsrichtung (6) verlaufenden Nuten (21),
- mit einer von den Nuten (21) aufgenommenen Erregerwicklung (23),
- mit einem von einem Kühlgas (K) durchströmten, zwischen dem Nutgrund (28) einer Nut (21) und dem dem Zylindermantel (20) abgewandten Ende der Erregerwicklung (23) freigelassenen Zuführkanal (29) und
- mit im Wesentlichen in radialer Richtung (R) die Erregerwicklung (23) durchsetzenden, den Zuführkanal (29) mit jeweils einer Ausströmöffnung (31) im Zylindermantel (20) des Rotorballens (7) verbindenden Kühlkanälen (30),
**gekennzeichnet durch**
- mindestens einen im Bereich der Mittellängsachse (13) angeordneten und in Wellenlängsrichtung (6) verlaufenden Verteilerkanal (32),
- die jeweiligen Zuführkanäle (29) mit dem Verteilerkanal (32) verbindende Verbindungskanäle (33) und
- mindestens einen Einlasskanal (36) je Verteilerkanal (32) zur Zufuhr des Kühlgases (K).

2. Rotor (2) nach Anspruch 1,
**gekennzeichnet durch**
zumindest einen den Verteilerkanal (32) mit der Außenseite der Rotorwelle (5) verbindenden Einlasskanal (36).

3. Rotor (2) nach Anspruch 1 oder 2,
**dadurch gekennzeichnet, dass**
die Verbindungskanäle (33) in radialer Richtung (R) verlaufen.

4. Rotor (2) nach Anspruch 3,
**dadurch gekennzeichnet, dass**
die Verbindungskanäle (33) und die Kühlkanäle (30) in Flucht zueinander liegen.

5. Rotor (2) nach einem der vorhergehenden Ansprüche,
**dadurch gekennzeichnet, dass**
ein Verteilerkanal (32) einer Mehrzahl von Zuführkanälen (29) gemeinsam zugeordnet ist.

6. Rotor (2) nach einem der vorhergehenden Ansprüche,
**dadurch gekennzeichnet, dass**
ein zentraler Verteilerkanal (32) für die Beaufschlagung sämtlicher Zuführkanäle (29) mit Kühlgas (K) vorgesehen ist.

7. Rotor (2) nach einem der vorhergehenden Ansprüche,
**dadurch gekennzeichnet, dass**
der zumindest eine Einlasskanal (36) im Wesentlichen in radialer Richtung (R) verläuft.

8. Rotor (2) nach einem der vorhergehenden Ansprüche,
**dadurch gekennzeichnet, dass**
die stirnseitigen Enden der Nuten (21) verschlossen sind.

9. Rotor (2) nach einem der vorhergehenden Ansprüche,
**dadurch gekennzeichnet, dass**
im Zuführkanal (29) ein an dessen Abmessungen angepasster Leiterstab zur Vergrößerung der Erregerwicklung (23) angeordnet ist.

10. Turbogenerator (1) mit einem antreibbaren, drehbeweglich gelagerten Rotor (2) nach einem der Ansprüche 1 bis 9 und mit einem den Rotor (2) umgebenden ortsfesten Stator (3).

11. Turbogenerator (1) nach Anspruch 10,
**gekennzeichnet durch**
zumindest ein auf der Rotorwelle (5) des Rotors (2) angeordnetes Lüfterrad (14) zur Förderung von Kühlgas (K).

12. Turbogenerator (1) nach Anspruch 10 oder 11,
**gekennzeichnet durch**
ein den Rotor (2) und den Stator (3) umgebendes gasdichtes Gehäuse (4).
